# FASCICULE DE BREVET EUROPEEN

(11) **EP 2 363 036 B1**
(45) Date de publication et mention de la délivrance du brevet: **07.11.2012**
(21) Numéro de dépôt: 11153384.0
(22) Date de dépôt: 04.02.2011
(51) Int. Cl.: A44C 5/00, A44C 27/00, B29C 70/74, C04B 41/48, C04B 41/49, C04B 41/52, C04B 41/89, C04B 41/91, C09D 5/00, C09D 127/12, C04B 41/45, B29C 70/68, G04B 19/12, B29K 21/00

(54) **Procédé de fabrication d'une pièce comportant un revêtement élastomère, et pièce obtenue par ce procédé**
Verfahren zur Herstellung eines Werkstücks, das über eine Elastomerbeschichtung verfügt, und ein durch dieses Verfahren erhaltenes Werkstück
Method for producing a part comprising an elastomer covering, and part obtained by this method

(30) Priorité: 25.02.2010 CH 2402010
(43) Date de publication de la demande: 07.09.2011
(73) Titulaire: BIWI S.A., 2855 Glovelier (CH)
(72) Inventeur: Bourquard, Pascal, 2854, Bassecourt (CH)
(74) Mandataire: GLN

(56) Documents cités:
- EP-A1- 0 498 339
- EP-A1- 1 127 510
- EP-A1- 1 813 385
- EP-A1- 2 147 907
- WO-A1-2008/044884
- US-A- 4 495 247

## Description

### Domaine technique

La présente invention se rapporte aux pièces munies d'un revêtement élastomère, et plus particulièrement à des pièces comportant un substrat ou une structure en céramique, saphir ou cristal, recouvert au moins partiellement d'un élastomère. De telles pièces peuvent être utilisées notamment dans le domaine de l'horlogerie ou de la bijouterie, mais également dans d'autres domaines tels que le domaine médical relatif par exemple aux implants en céramique.

L'invention concerne également un procédé de fabrication de telles pièces.

### Etat de la technique

Des pièces de ce type, comprenant un substrat métallique, sont par exemple décrites dans le brevet EP 0 738 747. Le substrat métallique est traité par plasma, puis recouvert d'un primaire comprenant un silane bifonctionnel, avant le dépôt d'un revêtement de caoutchouc.

On connait également par la demande WO 08/044884 un procédé de réalisation d'une pièce comprenant un substrat en plastique ou en Téflon recouvert d'un revêtement à base de caoutchouc siliconé. Un agent de couplage silane formant des liaisons chimiques avec les groupes fonctionnels réactifs est ajouté au caoutchouc siliconé avant d'être appliqué sur le substrat.

Il existe donc de nombreux procédés permettant d'obtenir une pièce comprenant un substrat de nature variée et un revêtement élastomère.

Toutefois, ces procédés ne sont pas décrits comme pouvant être utilisés sur un substrat en céramique, saphir ou cristal.

Le brevet EP 0 498 339 décrit un ornement, à la surface duquel est déposé un film fin comprenant des groupes fluorés. L'ornement peut être de la céramique, du saphir, rubis, diamant, cristal, etc... Le film est obtenu par dépôt d'une solution contenant un composant présentant à une extrémité un groupe carboné fluoré et à l'autre extrémité un groupe chlorosilane qui va réagir avec les groupes hydroxyle de la surface de l'ornement. Une première couche de silane peut être déposée. Ce document ne prévoit donc pas l'application d'un revêtement élastomère.

De plus, aucun de ces procédés n'est satisfaisant. En effet, ces procédés prévoyant l'utilisation de silanes dans le revêtement extérieur, en contact avec la peau, les pièces obtenues ne sont pas compatibles avec les normes de la FDA ou la norme Reach.

Un but de la présente invention est donc de pallier ces inconvénients, en proposant un autre procédé permettant de réaliser des pièces ne comprenant pas de silane dans le revêtement extérieur, celui-ci pouvant être éventuellement en contact avec la peau.

Un autre but de la présente invention est de proposer un procédé permettant plus spécifiquement de réaliser des pièces comprenant un revêtement élastomère et un substrat en céramique, saphir ou cristal.

### Divulgation de l'invention

A cet effet, il est proposé un procédé de fabrication d'une pièce comportant un substrat et un revêtement élastomère, caractérisé en ce qu'il comprend les étapes suivantes :
a) éventuellement, traitement du substrat pour générer en surface des groupes actifs,
b) application sur le substrat d'une première composition comprenant au moins un premier matériau élastomère, au moins un silane et éventuellement au moins un agent d'adhérisation, pour former une couche intermédiaire,
c) application d'une seconde composition comprenant un second matériau élastomère pour former ledit revêtement, et
d) cuisson de la pièce formée.

De préférence, le substrat est réalisé dans un matériau choisi parmi la céramique, le saphir et le cristal.

Selon une variante de mise en oeuvre, le substrat peut comprendre un relief entouré d'une zone en creux, et le procédé peut comprendre en outre les étapes suivantes, postérieures à l'étape d):
e) éliminer par abrasion le revêtement élastomère et la couche intermédiaire jusqu'à rendre le relief apparent,
f) effectuer une opération de finition sur les surfaces du relief et du revêtement élastomère leur conférant leur aspect final.

Ce procédé permet de réaliser une pièce comprenant un revêtement élastomère jouxtant un relief réalisé dans un matériau différent, leurs états de surface étant similaire. On obtient alors une surface continue, ayant un aspect homogène, malgré le contraste des matériaux utilisés et leurs caractéristiques physiques et mécaniques très différentes.

La présente invention concerne également une pièce comprenant un substrat et un revêtement élastomère à base d'un second matériau élastomère, ladite pièce comprenant entre le substrat et le revêtement élastomère une couche intermédiaire obtenue à partir d'une composition comprenant au moins un premier matériau élastomère, au moins un silane et éventuellement au moins un agent d'adhérisation.

Selon une variante de réalisation, le substrat peut comprendre un relief entouré d'une zone en creux jouxtant le revêtement élastomère, ledit relief et ledit revêtement élastomère ayant des surfaces apparentes dont l'état est similaire, reliées l'une à l'autre sans solution de continuité.

Le fait de combiner un matériau rigide et élastique tel que la céramique à un matériau viscoélastique ouvre une multitude de possibilités d'applications.

### Brève description des dessins

D'autres caractéristiques de la présente invention apparaîtront plus clairement à la lecture de la description qui va suivre, faite en référence aux dessins annexés, dans lesquels :
- les figures 1 à 6 représentent, en vue cavalière et en coupe, les différentes étapes relatives à la mise en oeuvre du procédé selon l'invention sur une pièce constitutive d'un fermoir, et
- la figure 7 représente en vue cavalière un élément d'un cadran fabriqué selon l'invention.

### Mode(s) de réalisation de l'invention

Selon l'invention, le procédé de fabrication d'une pièce comportant un substrat et un revêtement élastomère comprend les étapes suivantes :
a) éventuellement, traitement du substrat pour générer en surface des groupes actifs,
b) application sur le substrat d'une première composition comprenant au moins un premier matériau élastomère, au moins un silane et éventuellement au moins un agent d'adhérisation, pour former une couche intermédiaire,
c) application d'une seconde composition comprenant un second matériau élastomère pour former ledit revêtement, et
d) cuisson de la pièce formée.

Conformément à l'étape a) du procédé selon l'invention, en fonction de la nature du substrat, notamment lorsque le substrat est réalisé en céramique, saphir et cristal, il est préférable de traiter au préalable ledit substrat de manière à générer en surface des groupes actifs, capables de réagir avec le silane de la première composition. Ce traitement selon l'étape a) peut comprendre un traitement physique tel que le traitement du substrat par plasma, et plus particulièrement un plasma d'oxygène permettant de générer en surface des groupes hydroxyle actifs.

Par ailleurs, l'état de surface du substrat est tel que l'écart moyen arithmétique Ra de son profil de surface est compris entre 1.6 µm et 12.5 µm. Si nécessaire, le procédé de l'invention peut comprendre une étape de sablage préalablement à l'étape a) afin de conférer au substrat l'état de surface adéquat.

De préférence, la céramique est à base de zircone, avec un taux de pureté supérieur à 90%.

Conformément à l'étape b), on applique ensuite sur le substrat éventuellement traité, une première composition comprenant au moins un premier matériau élastomère, au moins un silane et éventuellement au moins un agent d'adhérisation, ladite première composition déposée formant la couche intermédiaire.

La première composition peut comprendre également des charges, renforçantes ou non, des agents de vulcanisation ou tout autre additif communément utilisé par l'homme du métier dans le domaine des formulations à base d'élastomère, et plus particulièrement des formulations à base de fluoroélastomère.

Dans la suite de la description, le mélange composé de l'élastomère, des charges, des agents de vulcanisation et autres additifs traditionnels, est appelé « formulation élastomère ».

La première composition comprend entre 20 % et 80 % en poids d'une formulation élastomère comprenant le premier matériau élastomère, entre 0.1 % et 30 % en poids de silane, et de préférence entre 0.1 % et 30 % en poids d'agent d'adhérisation par rapport au poids total de la première composition.

Le silane est de préférence au moins bifonctionnel et comprend un groupe fonctionnel capable de former des liaisons covalentes avec la surface du substrat et un groupe fonctionnel capable de former des liaisons covalentes avec les groupes fonctionnels d'au moins l'un des composants de la première composition et d'au moins l'un des composants de la seconde composition, en particulier les premier et second matériaux élastomères.

Le groupe fonctionnel capable de former des liaisons covalentes avec la surface du substrat peut être un groupe hydroxy ou un groupe alcoxy pouvant comprendre un radical cyclique ou acyclique.

Le groupe fonctionnel capable de former des liaisons covalentes avec les groupes fonctionnels d'au moins l'un des composants de la première composition et d'au moins l'un des composants de la seconde composition peut être un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison, tel que radical vinyl.

Des exemples des silanes qui peuvent être utilisés sont le 3-aminopropyl-triéthoxysilane, le vinyltriéthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-glycidoxyéthyl-triéthoxysilane, le 3-mercaptopropyl-triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropyl-méthyl-diéthoxysilane, le tétrasulfure de bis triéthoxy silylpropyle, le tétrasulfure de bis triméthoxy silylpropyle, le p-(triméthoxysilyl)benzyl diazoacétate, le 4-(triméthoxysilyl)cyclohexylsulfonyl azidure, le 6-(triméthoxysilyl)hexylsulfonyl azidure.

Les silanes préférés sont le 3-aminopropyl-triéthoxysilane et le vinyltriéthoxysilane.

On peut utiliser un seul silane ou un mélange de silanes.

Le silane est de préférence mélangé à un agent d'adhérisation qui comprend au moins un alcool permettant l'hydrolyse du silane de départ. L'agent d'adhérisation est choisi parmi le groupe comprenant le méthanol et l'éthanol.

Le premier et /ou second élastomère est de préférence un élastomère fluorocarboné.

Le premier et/ou second élastomère peut être également thermoplastique.

Le premier et/ou second élastomère peut être utilisé seul ou en mélange avec d'autres élastomères appropriés.

Selon l'étape c), on applique ensuite la seconde composition comprenant un second matériau élastomère pour former un revêtement élastomère.

Le second matériau élastomère est choisi de sorte que le revêtement élastomère présente une dureté Shore A comprise entre 40 et 80.

La seconde composition comprend également tous les additifs utilisés habituellement en fonction des applications, tels que des charges, des agents de vulcanisation, des colorants, etc afin de former avec le second matériau élastomère une formulation élastomère. Lorsque la pièce est utilisée dans le domaine de l'horlogerie ou de la bijouterie, les composants de la seconde composition qui va constituer le revêtement élastomère extérieur en contact avec la peau, sont biocompatibles et répondent aux normes FDA et Reach.

D'une manière avantageuse, la seconde composition est exempte de silane de sorte que le revêtement élastomère disposé à l'extérieur est exempt de silane.

La couche intermédiaire présente une épaisseur comprise entre 0,02 mm et 0,05 mm et le revêtement élastomère présente une épaisseur mimimum de 0,2 mm.

Conformément à l'étape d), la pièce selon l'invention subit une opération de cuisson.

La première composition peut être appliquée par pulvérisation sur le substrat, suivie d'un séchage en étuve ou à l'air libre, la deuxième composition est appliquée par surmoulage du substrat selon l'une quelconque des techniques connues, à savoir, l'injection, la compression, l'injection compression, etc. En fonction de l'élastomère utilisé, la cuisson comprend la vulcanisation de l'élastomère.

La présente invention, utilisant une couche intermédiaire, permet au fabricant de conserver ses formulations de la composition du revêtement extérieur tout en garantissant l'adhésion de ce revêtement extérieur sur un substrat, notamment en céramique, saphir ou cristal.

De plus, la couche intermédiaire présente une teneur en élastomère importante, ce qui permet de lui conférer un comportement polymère. Les propriétés mécaniques sont améliorées. On peut également contrôler la rigidité entre le substrat et le revêtement élastomère en adaptant les proportions silane/premier matériau élastomère de la couche intermédiaire.

Les pièces de l'invention peuvent être des pièces utilisées dans le domaine de l'horlogerie ou de la bijouterie, telles que les éléments d'un bracelet de montre ou du cadran. La présente invention peut également être utilisée pour former un joint caoutchouc sur un support en céramique ou pour réaliser un implant médical en céramique comprenant un revêtement élastomère compatible avec les os, et dont la rigidité est contrôlée au moyen de la formulation de la couche intermédiaire.

Selon une variante de réalisation, la pièce comprend un substrat présentant un relief entouré d'une zone en creux jouxtant le revêtement élastomère, ledit relief et ledit revêtement élastomère ayant des surfaces apparentes dont l'état est similaire, reliées l'une à l'autre sans solution de continuité. Le relief peut être disposé dans la partie centrale du revêtement élastomère ou peut former un cadre entourant ledit revêtement. Les zones en creux ont une profondeur comprise entre 0.2 mm et 0.3 mm. L'état de surface du fond des zones en creux est tel que l'écart moyen arithmétique Ra de son profil de surface est compris entre 1.6 µm et 12.5 µm.

Le remplissage des zones en creux se fait par surmoulage en recouvrant complètement les reliefs avec une surépaisseur comprise entre 0.05 mm et 0.2 mm. La technique utilisée pour le surmoulage est fonction de la géométrie de la pièce.

Une telle pièce est obtenue au moyen du procédé selon l'invention qui comprend en outre les étapes suivantes postérieures à l'étape d):
e) éliminer par abrasion le revêtement élastomère et la couche intermédiaire jusqu'à rendre le relief apparent,
f) effectuer une opération de finition sur les surfaces du relief et du revêtement élastomère leur conférant leur aspect final.

L'opération de finition peut être de type satinage ou polissage afin d'obtenir un aspect final satiné ou poli, sans abimer le substrat.

### Exemples :

L'invention sera aisément comprise à l'aide des exemples non limitatifs qui suivent.

Dans tous ces essais toutes les données concernant les formulations des compositions sont des parties en poids, sauf indication différente.

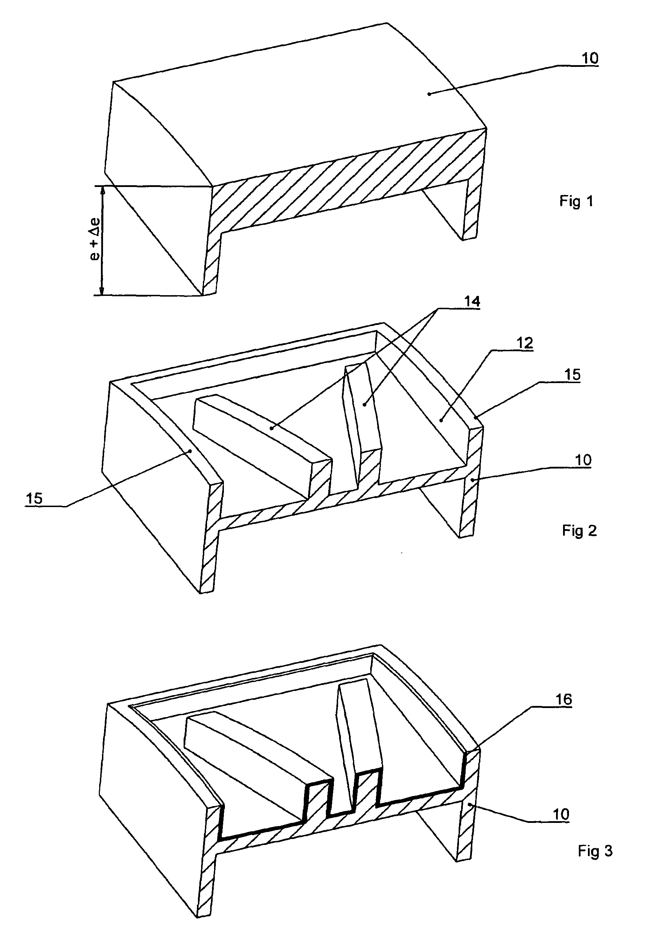

En référence aux figures 1 à 6, il est représenté une pièce constitutive d'un bracelet 10 en céramique, tel qu'un maillon. La pièce 10 est destinée à être partiellement revêtue d'une couche d'élastomère, par le procédé selon l'invention. La face supérieure a une surépaisseur Δe de 0,05 mm par rapport à la cote e de la pièce 10 terminée.

La face supérieure est ensuite travaillée (figure 2), par fraisage ou par attaque chimique pour former une creusure 12. Un décor apparaît formant un relief 14, pouvant représenter une marque ou un dessin esthétique. Le pourtour de la creusure 12, également en relief, constitue une cloison en surépaisseur 15 ayant essentiellement une fonction esthétique.

Il est primordial que le pourtour du décor soit parfait, celui-ci formant le contraste entre le métal et l'élastomère, comme cela sera expliqué plus loin. La profondeur de la creusure 12 est de 0.3 mm et l'état de surface du fond de la creusure est tel que l'écart moyen arithmétique Ra de son profil de surface est compris entre 1.6 µm et 12.5 µm.

En variante le décor 14 formant relief pourrait être rapporté, être obtenu par emboutissage ou encore par tout autre procédé connu de l'homme du métier et permettant de former un décor en relief.

Selon l'invention, la pièce est tout d'abord traitée par un plasma d'oxygène.

Puis on applique sur le substrat traité une première composition formant la couche intermédiaire 16. Ladite première composition comprend :
- 20 à 80% d'une formulation élastomère comprenant un élastomère fluorocarboné,
- 0,1 à 30% d'un mélange de silane comprenant du 3-aminopropyl-triéthoxysilane et du vinyltriéthoxysilane dans un rapport 1/1,
- 0,1 à 30% d'éthanol utilisé comme agent d'adhérisation.

La couche 16 a une épaisseur de l'ordre de 0,02 mm à 0,05 mm. Elle est déposée sur la pièce 10 par pulvérisation, les parties devant être épargnées étant protégées par un masque. Il est également possible de faire appel aux techniques de photolithographie. La couche 16 apparaît sur les figures avec une épaisseur exagérée de manière à la rendre apparente.

En variante, la couche 16 peut être éliminée mécaniquement ou chimiquement des zones non recouvertes après seulement que la pièce a été terminée. De la sorte, la couche 16 peut assurer une protection en cours de fabrication.

On relèvera que le relief ne doit pas nécessairement être recouvert de la première composition formant la couche intermédiaire, dès lors que le revêtement élastomère sera ensuite retiré de ces zones-là.

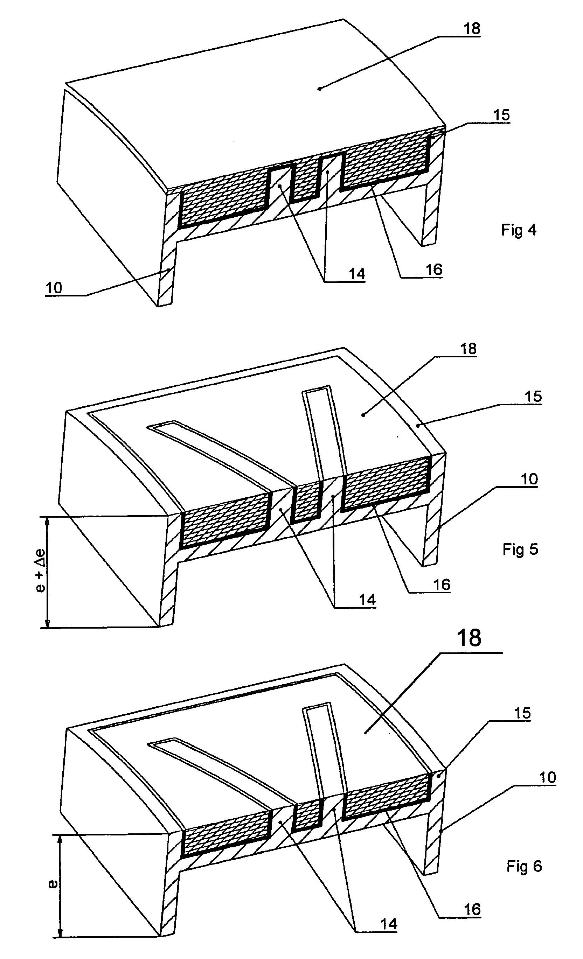

Après le dépôt de la couche intermédiaire 16, et comme le montre la figure 4, la seconde composition formant le revêtement élastomère 18 est mise en place par surmoulage, selon l'une quelconque des techniques connues, soit l'injection, la compression, l'injection compression, l'injection transfert etc... Quelle que soit la technique utilisée, le revêtement 18 recouvrira complètement le décor 14 et la cloison 15 d'au moins 0,05 mm.

La seconde composition est exempte de silane et comprend un élastomère fluorocarboné de dureté Shore A comprise entre 60 et 80.

La pièce est ensuite vulcanisée selon l'une quelconque des techniques connues, soit l'injection, la compression, l'injection compression, l'injection transfert.

L'opération suivante, illustrée à la figure 5, consiste à enlever la surépaisseur du revêtement élastomère 18 par abrasion, par exemple au moyen d'une machine à lapider, qui est munie d'une meule. De telles machines sont bien connues de l'homme du métier.

Enfin, au cours d'une opération de finition, représentée à la figure 6, l'état de surface est finalisé, par émerisage, satinage ou polissage. C'est au cours de cette opération qu'est enlevée la surépaisseur Δe mentionnée en référence à la figure 1.

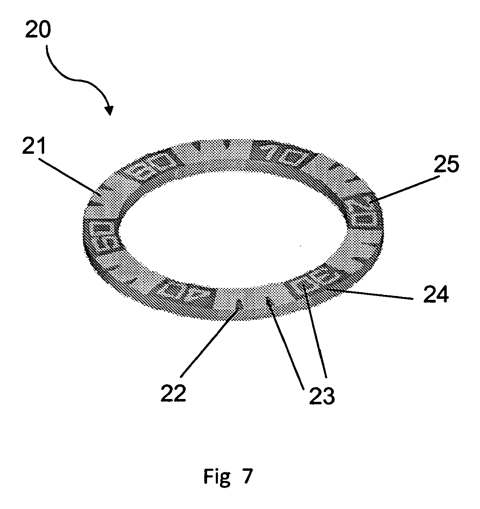

En référence à la figure 7, le procédé de l'invention est appliqué de manière similaire pour la fabrication d'un élément de cadran 20 comprenant un substrat en céramique 21, des zones en creux 22 remplies d'un revêtement élastomère 23 et des zones en creux 24 comportant un décor 25 en relief formant des chiffres, lesdites zones en creux 24 étant également remplies d'un revêtement élastomère 23.

## Revendications

1. Procédé de fabrication d'une pièce (10) comportant un substrat et un revêtement élastomère (18), **caractérisé en ce qu'**il comprend les étapes suivantes :
a) éventuellement, traitement du substrat pour générer en surface des groupes actifs,
b) application sur le substrat d'une première composition comprenant au moins un premier matériau élastomère, au moins un silane et éventuellement au moins un agent d'adhérisation, pour former une couche intermédiaire,
c) application d'une seconde composition comprenant un second matériau élastomère pour former ledit revêtement, et
d) cuisson de la pièce formée.

2. Procédé selon la revendication 1, **caractérisé en ce que** le substrat est réalisé dans un matériau choisi parmi la céramique, le saphir et le cristal.

3. Procédé selon l'une quelconque des revendications précédentes, **caractérisé en ce que** l'étape a) comprend le traitement du substrat par plasma.

4. Procédé selon l'une quelconque des revendications précédentes, **caractérisé en ce que** la seconde composition est exempte de silane.

5. Procédé selon l'une quelconque des revendications précédentes, **caractérisé en ce que** la première composition comprend entre 20 % et 80 % en poids d'une formulation élastomère comprenant ledit premier matériau élastomère, entre 0.1 % et 30 % en poids de silane, et éventuellement entre 0.1 % et 30 % en poids d'agent d'adhérisation, par rapport au poids total de la première composition.

6. Procédé selon l'une quelconque des revendications précédentes, **caractérisé en ce que** le premier et/ou second élastomère est un élastomère fluorocarboné.

7. Procédé selon l'une quelconque des revendications précédentes, **caractérisé en ce que** le silane est au moins bifonctionnel et comprend un groupe fonctionnel capable de former des liaisons covalentes avec la surface du substrat et un groupe fonctionnel capable de former des liaisons covalentes avec les groupes fonctionnels d'au moins l'un des composants des première et seconde compositions.

8. Procédé selon l'une quelconque des revendications précédentes, **caractérisé en ce que** l'agent d'adhérisation est choisi parmi le groupe comprenant le méthanol et l'éthanol.

9. Procédé selon l'une quelconque des revendications précédentes, dans lequel le substrat comprend un relief (14) entouré d'une zone en creux (12), **caractérisé en ce qu'**il comprend en outre les étapes suivantes postérieures à l'étape d):
e) éliminer par abrasion le revêtement élastomère (18) et la couche intermédiaire jusqu'à rendre le relief (14) apparent,
f) effectuer une opération de finition sur les surfaces du relief (14) et du revêtement élastomère (18) leur conférant leur aspect final.

10. Pièce (10) comprenant un substrat et un revêtement élastomère (18) à base d'un second matériau élastomère, **caractérisée en ce qu'**elle comprend entre le substrat et le revêtement élastomère (18) une couche intermédiaire (16) obtenue à partir d'une composition comprenant au moins un premier matériau élastomère, au moins un silane et éventuellement au moins un agent d'adhérisation.

11. Pièce selon la revendication 10, **caractérisée en ce que** le substrat est réalisé dans un matériau choisi parmi la céramique, le saphir et le cristal.

12. Pièce selon l'une quelconque des revendications 10 et 11, caractérisée en ce le substrat a préalablement été traité par plasma.

13. Pièce selon l'une quelconque des revendications 10 à 12, **caractérisée en ce que** le revêtement élastomère (18) est extérieur et est exempt de silane.

14. Pièce selon l'une quelconque des revendications 10 à 13, **caractérisée en ce que** ladite composition comprend entre 20 % et 80 % en poids d'une formulation élastomère comprenant ledit premier matériau élastomère, entre 0.1 % et 30 % en poids de silane, et éventuellement entre 0.1 % et 30 % en poids d'agent d'adhérisation, par rapport au poids total de la composition.

15. Pièce selon l'une quelconque des revendications 10 à 14, **caractérisée en ce que** le premier et /ou second élastomère est un élastomère fluorocarboné.

16. Pièce selon l'une quelconque des revendications 10 à 15, **caractérisée en ce que** la couche intermédiaire (16) présente une épaisseur comprise entre 0,02 mm et 0.05 mm et **en ce que** le revêtement élastomère (18) présente une épaisseur minimale de 0.2mm.

17. Pièce selon l'une quelconque des revendications 10 à 16, **caractérisée en ce que** le substrat comprend un relief (14) entouré d'une zone en creux (12) jouxtant le revêtement élastomère (18), ledit relief (14) et ledit revêtement élastomère (18) ayant des surfaces apparentes dont l'état est similaire, reliées l'une à l'autre sans solution de continuité.

## Claims

1. A method for manufacturing a part (10) comprising a substrate and an elastomer coating (18), **characterized in that** it comprises the following steps:
a) optionally treating the substrate to generate active groups on the surface,
b) applying a first composition on the substrate, said composition comprising at least one first elastomer material, at least one silane and optionally one bonding agent, to form an intermediate layer,
c) applying a second composition comprising a second elastomer material to form said coating, and
d) curing the formed part.

2. The method according to claim 1, **characterized in that** the substrate is made from a material chosen from among ceramic, sapphire and crystal.

3. The method according to any one of the preceding claims, **characterized in that** step a) comprises plasma treating the substrate.

4. The method according to any one of the preceding claims, **characterized in that** the second composition is free from silane.

5. The method according to any one of the preceding claims, **characterized in that** the first composition comprises between 20% and 80% by weight of an elastomer formulation comprising said first elastomer material, between 0.1% and 30% by weight of silane, and optionally between 0.1% and 30% by weight of bonding agent, relative to the total weight of the first composition.

6. The method according to any one of the preceding claims, **characterized in that** the first and/or second elastomer is a fluorocarbon elastomer.

7. The method according to any one of the preceding claims, **characterized in that** the silane is at least bifunctional and comprises a functional group capable of forming covalent bonds with the surface of the substrate and a functional group capable of forming covalent bonds with the functional groups of at least one of the compounds of the first and second compositions.

8. The method according to any one of the preceding claims, **characterized in that** the bonding agent is chosen from among the group including methanol and ethanol.

9. The method according to any one of the preceding claims, wherein the substrate comprises a relief portion (14) surrounded by a hollow area (12), **characterized in that** it also comprises the following steps after step d):
e) eliminating by abrasion the elastomer coating (18) and the intermediate layer until the relief portion (14) is made visible,
f) performing a finishing operation on the surfaces of the relief portion (14)
and the elastomer coating (18) giving them their final appearance.

10. A part (10) comprising a substrate and an elastomer coating (18) based on a second elastomer material, **characterized in that** it comprises, between the substrate and the elastomer coating (18), an intermediate layer (16) obtained from a composition comprising at least one first elastomer material, at least one silane, and optionally at least one bonding agent.

11. The part according to claim 10, **characterized in that** the substrate is made from a material chosen from among ceramic, sapphire and crystal.

12. The part according to any one of claims 10 and 11, **characterized in that** the substrate has been previously plasma treated.

13. The part according to any one of claims 10 to 12, **characterized in that** the elastomer coating (18) is external and is free from silane.

14. The part according to any one of claims 10 to 13, **characterized in that** said composition comprises between 20% and 80% by weight of an elastomer formulation comprising said first elastomer material, between 0.1% and 30% by weight of silane, and optionally between 0.1% and 30% by weight of bonding agent, relative to the total weight of the composition.

15. The part according to any one of claims 10 to 14, **characterized in that** the first and/or second elastomer is a fluorocarbon elastomer.

16. The part according to any one of claims 10 to 15, **characterized in that** the intermediate layer (16) has a thickness between 0.02 mm and 0.05 mm and **in that** the elastomer coating (18) has a minimum thickness of 0.2 mm.

17. The part according to any one of claims 10 to 16, **characterized in that** the substrate comprises a relief portion (14) surrounded by a hollow area (12) adjoining the elastomer coating (18), said relief portion (14) and said elastomer coating (18) having visible surfaces with a similar state, connected to one another without a continuity solution.

## Patentansprüche

1. Verfahren zur Herstellung eines Teils (10), das ein Substrat und eine Elastomerbeschichtung (18) aufweist, **dadurch gekennzeichnet, dass** es die folgenden Schritte umfasst:
a) eventuell Behandlung des Substrats, um auf der Oberfläche aktive Gruppen zu erzeugen,
b) Auftragen einer ersten Zusammensetzung auf das Substrat, die mindestens ein erstes Elastomermaterial, mindestens ein Silan und eventuell mindestens ein Haftmittel umfasst, um die Zwischenschicht zu bilden,
c) Auftragen einer zweiten Zusammensetzung, die ein zweites Elastomermaterial umfasst, um die Beschichtung zu bilden, und
d) Brennen des vorgeformten Teils.

2. Verfahren nach Anspruch 1, **dadurch gekennzeichnet, dass** das Substrat aus einem Material hergestellt ist, das aus der Keramik, dem Saphir und dem Kristall ausgewählt ist.

3. Verfahren nach einem der vorangehenden Ansprüche, **dadurch gekennzeichnet, dass** der Schritt a) die Behandlung des Substrats durch Plasma umfasst.

4. Verfahren nach einem der vorangehenden Ansprüche, **dadurch gekennzeichnet, dass** die zweite Zusammensetzung silanfrei ist.

5. Verfahren nach einem der vorangehenden Ansprüche, **dadurch gekennzeichnet, dass** die erste Zusammensetzung zwischen 20 und 80 Gew.-% einer Elastomerformulierung, die das erste Elastomermaterial umfasst, zwischen 0,1 und 30 Gew.-% Silan und eventuell zwischen 0,1 und 30 Gew.-% Haftmittel im Verhältnis zum Gesamtgewicht der ersten Zusammensetzung umfasst.

6. Verfahren nach einem der vorangehenden Ansprüche, **dadurch gekennzeichnet, dass** das erste und/oder zweite Elastomer ein Fluorcarbonelastomer ist.

7. Verfahren nach einem der vorangehenden Ansprüche, **dadurch gekennzeichnet, dass** das Silan mindestens bifunktional ist und eine Funktionsgruppe umfasst, die imstande ist, kovalente Verbindungen mit der Oberfläche des Substrats zu bilden und eine funktionale Gruppe, die imstande ist, kovalente Verbindungen mit den Funktionsgruppen mindestens eines der Bestandteile der ersten und zweiten Zusammensetzung zu bilden

8. Verfahren nach einem der vorangehenden Ansprüche, **dadurch gekennzeichnet, dass** das Haftmittel aus der Gruppe ausgewählt ist, die das Methanol und das Ethanol umfasst.

9. Verfahren nach einem der vorangehenden Ansprüche, wobei das Substrat ein Relief (14) umfasst, das von einer hohlen Zone (12) umschlossen ist, **dadurch gekennzeichnet, dass** es nach dem Schritt d) ferner die folgenden Schritte umfasst:
e) Entfernen der Elastomerbeschichtung (18) und der Zwischenschicht durch Abtragen, bis das Relief (14) erscheint,
f) Durchführung einer Finishbehandlung auf den Oberflächen des Reliefs (14) und der Elastomerbeschichtung (18), die ihnen ihr Endaussehen verleiht.

10. Teil (10), das ein Substrat und eine Elastomerbeschichtung (18) auf der Basis eines zweiten Elastomermaterial umfasst, **dadurch gekennzeichnet, dass** es zwischen dem Substrat und der Elastomerbeschichtung (18) eine Zwischenschicht (16) umfasst, die aus einer Zusammensetzung gewonnen wird, die mindestens ein erstes Elastomermaterial, mindestens ein Silan und eventuell mindestens ein Haftmittel umfasst.

11. Teil nach Anspruch 10, **dadurch gekennzeichnet, dass** das Substrat aus einem Material hergestellt ist, das aus der Keramik, dem Saphir und dem Kristall ausgewählt ist.

12. Teil nach einem der Ansprüche 10 und 11, **dadurch gekennzeichnet, dass** das Substrat zuvor durch Plasma bearbeitet wurde.

13. Teil nach einem der Ansprüche 10 bis 12, **dadurch gekennzeichnet, dass** die Elastomerbeschichtung (18) außen und silanfrei ist.

14. Teil nach einem der Ansprüche 10 bis 13, **dadurch gekennzeichnet, dass** die Zusammensetzung zwischen 20 und 80 Gew.-% einer Elastomerformulierung, die das erste Elastomermaterial umfasst, zwischen 0,1 und 30 Gew.-% Silan und eventuell zwischen 0,1 und 30 Gew.-% Haftmittel im Verhältnis zum Gesamtgewicht der ersten Zusammensetzung umfasst.

15. Teil nach einem der Ansprüche 10 bis 14, **dadurch gekennzeichnet, dass** das erste und/oder zweite Elastomer ein Fluorcarbonelastomer ist.

16. Teil nach einem der Ansprüche 10 bis 15, **dadurch gekennzeichnet, dass** die Zwischenschicht (16) eine Dicke zwischen 0,02 mm und 0,05 mm inklusive aufweist und dass die Elastomerbeschichtung (18) eine minimale Dicke von 0,2 mm aufweist.

17. Teil nach einem der Ansprüche 10 bis 16, **dadurch gekennzeichnet, dass** das Substrat ein Relief (14) umfasst, das neben der Elastomerbeschichtung (18) von einer hohlen Zone (12) umgeben ist, wobei das Relief (14) und die Elastomerbeschichtung (18) sichtbare Oberflächen haben, deren Zustand ähnlich ist, die miteinander ohne Kontinuitätslösung verbunden sind.
